# DEMANDE DE BREVET EUROPEEN

(11) **EP 4 186 871 A1**
(43) Date de publication de la demande: **31.05.2023**
(21) Numéro de dépôt: 21306665.7
(22) Date de dépôt: 30.11.2021
(51) Int. Cl.: C03B 5/04, C03B 5/182, C03B 5/185

(54) **PROCÉDÉ ET FOUR HYDRIDE POUR LA FABRICATION DE VERRE COMPORTANT TROIS COURROIES DE CONVECTION**

(71) Demandeur: Saint-Gobain Glass France, 92400 Courbevoie (FR)
(72) Inventeur: SAGET, Aurélien, 86170 CISSE (FR); DE DIANOUS, Philippe, 60580 COYE LA FORET (FR); LE VERGE, Arnaud, 75004 PARIS (FR); COMBES, Jean-Marie, 95600 EAUBONNE (FR)
(74) Mandataire: Saint-Gobain Recherche

(57) **Abrégé**

L'invention concerne un procédé de fabrication de verre dans un four hybride (10), en particulier pour alimenter une unité de flottage du verre sur un bain de métal fondu, et un tel four hybride (10) caractérisé par le fait de comporter d'amont en aval :
- une zone (100) de fusion à voûte chaude comportant au moins des brûleurs (115) aptes à fondre un mélange vitrifiable pour obtenir un bain (106) de verre, ladite zone (100) de fusion délimitée par un premier muret (120) comportant une première courroie (C1) de convection ;
- une zone (200) d'affinage du verre comportant une première zone (210) d'affinage qui comporte au moins un brûleur (205) et des électrodes (230) et une deuxième zone (220) d'affinage, ladite première zone (210) d'affinage étant respectivement séparée de la zone (100) de fusion par ledit premier muret (120) et de la deuxième zone (220) d'affinage par un deuxième muret (240), dans laquelle le verre recircule dans la première zone (210) d'affinage suivant une deuxième courroie (C2) de convection et dans la deuxième zone (220) d'affinage suivant une troisième courroie (C3) de convection ; et
- une zone (300) de refroidissement du verre comportant un bassin (310) de conditionnement parcouru par ladite troisième courroie (C3) de convection.

## Description

### Domaine technique de l'invention

L'invention concerne un procédé et un four hydride pour la fabrication de verre comportant trois courroies de convection.

L'invention concerne plus particulièrement un four hydride pour la fabrication de verre combinant une zone de fusion à flammes, équipée de brûleurs et avantageusement pourvue en appoint de moyens de chauffage électrique (dit « boosting »), et une zone d'affinage comportant une première zone d'affinage qui est configurée de manière à pouvoir y piloter la température du verre indépendamment de celles d'une zone de fusion située en amont et d'une deuxième zone d'affinage située en aval.

L'invention concerne également un procédé de fabrication de verre dans un tel four hybride pour la fabrication de verre.

Le procédé et le four hybride pour la fabrication de verre selon l'invention délivre un verre de haute qualité qui est tout particulièrement apte à alimenter en verre une unité de flottage du verre sur un bain de métal fondu destinée à fabriquer du verre plat.

### Arrière-plan technique

On connaît de l'état de la technique différents exemples de conceptions de four pour la fabrication de verre qui dépendent notamment du produit à fabriquer, c'est-à-dire de la mise en forme finale du verre.

Ainsi, on distingue différentes conceptions de four selon que la production envisagée concerne des fibres de verre, le formage industriel de verre creux ou encore celui de verre plat.

L'un des enjeux industriels dans la conception des fours de verrerie est de pouvoir obtenir un verre dont les exigences en matière de qualité dépendent du produit, à cet égard la production de verre plat est comparativement l'une des plus exigeante.

Produit en très grande quantité, le verre plat est utilisé dans de nombreuses applications en raison de son caractère polyvalent, notamment largement utilisé dans les secteurs de l'électronique (écrans plats) ou encore de la construction et de l'automobile dans lesquels ce verre est susceptible d'être transformé suivant une grande variété de technique (bombage, trempe, etc.), constituant ainsi un verre de base pour tout un ensemble de produits verriers.

A proportion des enjeux tant de qualité que de quantité, la présente invention vise donc tout particulièrement la fabrication de verre pour le formage industriel d'un tel verre plat, lequel verre est conventionnellement obtenu au moyen d'une unité de flottage du verre sur un bain de métal fondu, généralement de l'étain, raison pour laquelle un tel verre plat est encore appelé verre flotté ou « float » selon le terme anglais.

Pour la fabrication de verre plat, il est attendu de pouvoir alimenter l'unité de flottage ou « float » avec un verre de haute qualité, c'est-à-dire un verre renfermant le moins d'infondus et de bulles possibles, soit généralement un verre présentant moins de 0,5 bulle / litre.

En effet, la qualité du verre est notamment, mais non exclusivement, déterminée en fonction du nombre de bulle(s) présente(s) dans le verre qui est exprimé en « bulle par litre ». Ainsi, la qualité d'un verre est considérée comme d'autant plus élevée que le nombre de bulle(s) par litre présente(s) dans le verre est particulièrement bas, voire infime.

Par ailleurs, on rappelle que la présence de bulles (ou de défauts gazeux) dans le verre est inhérente au procédé de fabrication du verre dans le processus d'élaboration duquel on distingue généralement trois étapes ou phases successives : la fusion, l'affinage et l'homogénéisation, et le conditionnement thermique du verre.

La présence de bulles dans le verre résulte en effet de l'étape de fusion au cours de laquelle est fondu un mélange vitrifiable, aussi appelé « composition ». Le mélange vitrifiable est constitué de matières premières comportant par exemple un mélange de sable, de calcaire (carbonate de calcium), de carbonate de soude, de dolomie pour la fabrication d'un verre sodocalcique (le verre le plus utilisé pour la fabrication de verre plat), et auxquelles est avantageusement ajouté du calcin (encore appelé groisil) constitué de débris de verre afin notamment de favoriser la fusion.

Le mélange vitrifiable est transformé en une masse liquide dans laquelle se dissolvent même les particules les moins miscibles, c'est-à-dire les plus riches en dioxyde de silicium ou silice (SiO₂) et pauvres en oxyde de sodium (Na₂O).

Le carbonate de sodium (Na₂CO₃) commence à réagir avec les grains de sable à partir de 775°C en dégageant alors des bulles de dioxyde de carbone (CO₂) dans un liquide devenant de plus en plus visqueux à mesure que le carbonate se transforme en silicate. De même, la transformation des grains de calcaire en chaux et la décomposition de la dolomie provoquent également l'émission de dioxyde de carbone (CO₂).

L'étape de fusion est achevée lorsqu'il n'y a plus de particules solides dans le liquide de verre fondu devenu très visqueux mais qui, à ce stade du procédé de fabrication, est alors rempli de bulles d'air et de gaz.

L'étape d'affinage et d'homogénéisation, généralement dite d'affinage, permet alors l'élimination desdites bulles présentes dans le verre fondu.

De manière connue, on utilise avantageusement au cours de cette étape des « affinants », c'est-à-dire des substances en faible concentration qui, en se décomposant à la température de fusion du bain, fournissent des gaz qui font gonfler les bulles afin d'en accélérer la montée vers la surface du verre.

L'étape de conditionnement thermique du procédé de fabrication permet ensuite d'abaisser la température du verre dès lors que, au début de l'opération de mise en forme, la viscosité du verre doit généralement être au moins dix fois plus élevée que pendant l'affinage.

Il existe bien évidemment une correspondance entre chacune des étapes de fabrication du verre qui viennent d'être décrite et la structure d'un four destiné à leur mise en œuvre.

Généralement, un tel four pour la fabrication de verre comporte ainsi successivement une zone de fusion dans laquelle a lieu la transformation par fusion du mélange vitrifiable en un bain de verre puis une zone d'affinage et d'homogénéisation pour éliminer les bulles du verre et enfin une zone de conditionnement thermique servant à refroidir le verre de manière à l'amener à la température de formage, bien inférieure aux températures subies par le verre au cours de son élaboration.

On retiendra notamment du processus d'élaboration du verre qui vient d'être rappelé que l'étape de fusion s'accompagne d'émission de dioxyde de carbone (CO₂), soit l'un des principaux gaz à effet de serre impliqué dans le changement climatique.

Hormis la fabrication d'un verre de haute qualité, ainsi que les défis industriels d'une forte productivité avec un coût de construction et d'exploitation des fours les plus faibles possibles, l'un des autres enjeux majeurs auquel l'industrie du verre doit faire face est actuellement écologique, à savoir la nécessité de trouver des solutions pour réduire l'empreinte carbone (en anglais « CO₂ footprint ») liée au processus d'élaboration du verre.

Pour parvenir à atteindre un objectif de neutralité carbone, une approche globale du processus est privilégiée en cherchant à agir sur les multiples leviers pour réduire tant les émissions directes lors de la fabrication que les émissions indirectes ou encore les émissions en amont et en aval de la chaîne de valeur, par exemple celles liées au transport des matériaux en amont puis du produit en aval.

Dès lors, les multiples leviers comprennent la conception des produits et la composition des matériaux, l'amélioration de l'efficacité énergétique des procédés industriels, l'utilisation d'énergies renouvelables et décarbonées, la collaboration avec les fournisseurs de matières premières et les transporteurs afin de réduire leurs émissions, et enfin, l'exploration des technologies de capture et de séquestration des émissions résiduelles.

Dans les émissions directes, outre celles inhérentes au processus d'élaboration du verre rappelées précédemment, le type d'énergie(s) utilisée(s) tout particulièrement pour l'étape de fusion à haute température (plus de 1500°C) représente la part la plus importante dans l'empreinte carbone du processus d'élaboration du verre puisqu'il s'agit généralement d'une énergie fossile, le plus souvent du gaz naturel, voire des produits pétroliers tels que du fioul.

Par conséquent, la recherche de nouvelles conceptions de four doit non seulement permettre de répondre aux enjeux industriels en lien avec la qualité du verre mais aussi permettre de réduire l'empreinte carbone du processus d'élaboration du verre, tant les émissions directes qu'indirectes de dioxyde de carbone (CO₂), et cela en réduisant notamment l'utilisation d'énergie(s) fossile(s).

La fabrication du verre est réalisée dans des fours qui n'ont eu de cesse d'évoluer depuis les premiers fours à pot (ou creuset) en passant par le four Siemens qui est habituellement considéré comme l'ancêtre des grands fours de verrerie à coulée continue d'aujourd'hui, à l'instar des fours à brûleurs transversaux pouvant produire jusqu'à 1200 tonnes de verre flotté par jour.

Le choix de l'énergie utilisée pour la fusion conduit ainsi à distinguer principalement deux grandes conceptions de four pour la fabrication du verre, respectivement les fours à flammes et les fours électriques.

Selon la première conception, les fours à flammes utilisent généralement des combustibles fossiles, notamment du gaz naturel pour les brûleurs, l'énergie thermique est ainsi transmise au verre par échange thermique entre les flammes et la surface du bain de verre.

Les fours à brûleurs transversaux précités sont un exemple de four selon cette première conception et sont largement exploités pour alimenter en verre fondu une unité de flottage ou « float » destinée à fabriquer du verre plat.

Selon la deuxième conception, les fours électriques sont des fours dans lesquels l'énergie thermique est produite par effet Joule dans la masse du verre en fusion.

En effet, substance isolante à température ambiante, le verre devient électriquement conducteur à haute température de sorte que l'on peut envisager d'utiliser l'effet Joule au sein même des fontes de verre pour les chauffer.

Toutefois, les fours électriques sont par exemple utilisés pour l'élaboration de verres particuliers tels que du verre opale au fluor ou du cristal au plomb ou encore sont communément utilisés pour la fabrication de fibres de verre pour de l'isolation thermique.

Ainsi, il est communément admis par l'Homme du métier que de tels fours électriques ne sont pas en mesure de permettre d'alimenter, ni en quantité, ni surtout en qualité de verre (pour rappel moins de 0,5 bulle par litre), une unité de flottage du verre sur un bain de métal fondu destiné à la fabrication de verre plat.

C'est la raison pour laquelle, les fours à flammes (comme les fours à brûleurs transversaux) demeurent à ce jour les seuls fours capables d'alimenter une telle unité de flottage du verre.

Par ailleurs, les fours à flammes présentent différents avantages qui justifient leur large utilisation pour la verrerie.

Cependant, les fours à flammes reposent sur l'utilisation d'énergies fossiles essentiellement du gaz naturel pour le combustible de sorte que leur bilan carbone est peu compatible avec les objectifs de réduction des émissions de dioxyde de carbone (CO₂), soit de l'empreinte carbone du processus d'élaboration du verre.

Pour compléter l'exposé des conceptions de four pour la fabrication de verre selon l'état de la technique, on citera encore une « troisième conception » ou évolution de four, ayant connue récemment des améliorations pour faire face notamment à l'enjeu écologique de réduction des émissions de dioxyde de carbone (CO₂).

Cette troisième conception de four est basée sur un four à flammes mais utilise cependant un chauffage d'appoint électrique, notamment pour augmenter momentanément la production du four ou encore pour améliorer la qualité du verre.

Par conséquent, de tels fours sont encore appelés « fours à flammes avec un appoint électrique ».

Les fours selon cette troisième conception combinent ainsi plusieurs sources d'énergies, respectivement fossile et électrique, et sont pour cette raison aussi appelés fours « hybrides ».

L'adjonction d'un chauffage électrique en appoint permet d'améliorer la capacité de fusion de fours à flammes laquelle est limitée par le transfert thermique se produisant entre la flamme et la surface du bain de verre.

Néanmoins, le fonctionnement d'un tel four hybride repose toujours principalement sur l'utilisation d'un combustible fossile, typiquement du gaz, de sorte que l'impact finalement obtenu sur l'amélioration de l'empreinte carbone du processus d'élaboration du verre reste limité.

En effet, l'électricité n'est utilisée ici qu'en appoint de sorte que son impact est proportionnel, en conséquence limité, ne contribuant généralement pas à l'apport de chaleur nécessaire à l'étape de fusion pour plus de 15%.

De surcroît, pour améliorer l'empreinte carbone, l'électricité utilisée doit encore être une électricité dite « verte », c'est-à-dire une électricité qui est produite à partir de sources d'énergies renouvelables et décarbonées.

Le but de l'invention est notamment de proposer une nouvelle conception de four pour la fabrication de verre, ainsi qu'un procédé de fabrication, capable de délivrer un verre de haute qualité pour alimenter tout particulièrement une unité de flottage du verre destinée à fabriquer du verre plat et cela tout en ayant une consommation d'énergie(s) qui permette d'obtenir une réduction significative des émissions de dioxyde de carbone (CO₂) liées au processus d'élaboration du verre.

### Résumé de l'invention

Dans ce but, l'invention propose un four hybride pour la fabrication de verre, en particulier pour alimenter une unité de flottage du verre sur un bain de métal fondu, ledit four hybride comportant d'amont en aval :
- une zone de fusion à voûte chaude comportant au moins des brûleurs aptes à fondre un mélange vitrifiable pour obtenir un bain de verre, ladite zone de fusion délimitée par un premier muret comportant une première courroie de convection ;
- une zone d'affinage du verre comportant une première zone d'affinage qui comporte au moins un brûleur et des électrodes et une deuxième zone d'affinage, ladite première zone d'affinage étant respectivement séparée de la zone de fusion par ledit premier muret et de la deuxième zone d'affinage par un deuxième muret, dans laquelle le verre recircule dans la première zone d'affinage suivant une deuxième courroie de convection et dans la deuxième zone d'affinage suivant une troisième courroie de convection ; et
- une zone de refroidissement du verre comportant un bassin de conditionnement parcouru par ladite troisième courroie de convection.

Avantageusement, le four hybride est destiné à alimenter en verre de haute qualité une zone de formage constituée par une unité de flottage du verre sur un bain de métal fondu.

Le four selon l'invention est dit « hybride » par analogie avec la troisième conception de four décrite précédemment, le terme « hybride » est ainsi employé pour le qualifier en raison de l'utilisation de deux sources d'énergie différentes, respectivement de l'énergie combustible et de l'énergie électrique.

Cependant, l'analogie avec la présente invention ne va pas au-delà dès lors que l'énergie électrique est non seulement avantageusement utilisée en appoint pour l'étape de fusion mais encore et surtout l'est principalement lors d'une étape d'affinage réalisée séparément de l'étape de fusion de sorte que la part de l'énergie électrique dans l'entièreté du processus d'élaboration devient substantielle par rapport à l'état de la technique.

En effet, l'invention propose avantageusement un taux d'hybridation bien supérieur à ce qui est connu jusqu'alors de l'état de la technique puisque la part de l'énergie électrique dans l'apport de chaleur par l'ensemble des électrodes agencées dans la première zone d'affinage, voire en appoint dans la zone de fusion et dans la deuxième zone d'affinage, s'élève à au moins 40% et même plus des apports de chaleur totaux du four.

Avantageusement, le four hybride selon l'invention mise donc en partie sur l'énergie électrique en faisant le pari de la disponibilité croissante d'une électricité « verte » par exemple obtenue à partir d'énergies éolienne, solaire, etc. et non à partir d'énergies fossiles comme le charbon ou le pétrole.

Avantageusement, l'énergie combustible utilisée dans les brûleurs de la zone de fusion n'est pas une énergie fossile comme le gaz naturel mais une autre énergie combustible équivalente, préférentiellement de l'hydrogène, en variante du bio-méthane.

Le four hybride selon l'invention combine donc une zone de fusion à flammes avec appoint électrique et une zone d'affinage préférentiellement électrique avec appoint à flammes comportant une première zone d'affinage et d'une deuxième zone d'affinage respectivement séparées.

Grâce à une telle combinaison, le four hybride selon l'invention permet d'obtenir un verre de haute qualité, c'est-à-dire comportant moins de 0,1 bulle par litre, de sorte que ce verre est avantageusement susceptible d'alimenter une unité de flottage du verre ou « float » destinée à la fabrication de verre plat.

En effet, le four hybride selon l'invention propose une nouvelle conception qui repose sur une séparation des zones au moyen de murets afin de séparer corolairement les étapes du procédé de fabrication qui y sont respectivement mises en œuvre.

Grâce à cette séparation, il devient dès lors possible de piloter chacune des étapes du procédé indépendamment des autres et ce faisant de d'optimiser tout particulièrement la consommation d'énergies de chacune ce qui est bénéfique notamment pour le bilan carbone.

Avantageusement, il n'y a notamment pas de retour du verre fondu de la zone d'affinage vers la zone de fusion dans un four hybride selon l'invention. Ainsi, aucune courroie de convection ou boucle de recirculation du verre ne s'étend depuis la zone d'affinage vers la zone de fusion comme dans un four selon l'état de la technique dans lequel une première courroie dans la zone de fusion et une deuxième courroie dans la zone d'affinage s'échangent mutuellement du verre.

Dans l'état de la technique et contrairement à la présente invention, l'apport de chaleur ne sert pas distinctement à l'étape de fusion ou à l'étape d'affinage en l'absence de zones séparées avec des courroies indépendantes.

En effet, une partie de l'apport de chaleur effectué par exemple dans la zone d'affinage d'un four hybride selon l'état de la technique est en général entraîné par la première courroie vers l'amont dans la zone de fusion de sorte qu'il n'est possible de piloter que globalement le procédé de fabrication, sans pouvoir en contrôler de manière précise et indépendante chacune des différentes étapes de fusion, d'affinage et de refroidissement.

Dans un four selon l'invention, l'étape d'affinage du verre s'effectue sur du verre ne renfermant avantageusement que pas ou peu d'infondus grâce notamment au premier muret permettant d'accroître le temps de séjour du verre dans la zone de fusion.

Dans la présente invention, un verre de haute qualité est en particulier obtenu grâce à une zone d'affinage à même d'être pilotée de manière séparée, indépendante, de la zone de fusion, grâce à quoi il est possible de dissocier le régime thermique de chacune de ces zones.

Dans un four selon l'état de la technique, en l'absence de séparation et de courroies de convection indépendantes, une telle dissociation des régimes thermiques n'est pas possible. Ainsi, il n'est pas possible d'optimiser finement l'apport de chaleur de manière distincte pour l'étape de fusion et pour l'étape d'affinage en particulier.

Dans l'invention, on pilote séparément chacune des trois courroies de convection que comportent respectivement la zone de fusion, la première zone d'affinage et la deuxième zone d'affinage de la zone d'affinage.

Avantageusement, l'utilisation d'une énergie combustible à titre principal pour l'étape de fusion, préférentiellement complétée en appoint par de l'énergie électrique, permet de fondre plus efficacement le mélange vitrifiable à une température notamment inférieure à ce qu'une fusion électrique nécessiterait par comparaison, de sorte que le choix de la fusion par combustion est en outre bénéfique en terme de durée de vie du four.

Avantageusement, l'énergie électrique utilisée pour les électrodes de la première zone d'affinage est transformée en un apport de chaleur qui ne sert qu'à l'affinage et n'est notamment pas transmis à la zone de fusion grâce au premier muret permettant l'absence de retour vers celle-ci, la première courroie de convection et la deuxième courroie de convection du verre sont ainsi indépendantes l'une de l'autre.

Avantageusement, le four hybride selon l'invention fait un double pari reposant, d'une part, sur une substitution des énergies fossiles en tant que combustible et, d'autre part, sur la disponibilité croissante d'une électricité « verte » par exemple obtenue à partir d'énergies éolienne, solaire, etc.

Avantageusement, l'énergie combustible utilisée dans les brûleurs des zones de fusion et d'affinage n'est pas une énergie fossile comme le gaz naturel mais une autre énergie combustible équivalente, préférentiellement de l'hydrogène, en variante du bio-méthane.

Le four hybride selon l'invention est en conséquence à même de répondre non seulement à l'enjeu de la haute qualité de verre requise pour alimenter une unité de flottage ou « float » mais également à l'enjeu écologique afin de permettre d'obtenir une réduction substantielle de l'empreinte carbone du processus d'élaboration.

Selon d'autres caractéristiques du four selon l'invention :
- la zone de fusion comporte des électrodes immergées dans le bain de verre qui constituent des moyens de chauffage électrique d'appoint (encore appelés « boosting ») ;
- l'apport de chaleur par les électrodes, en appoint des brûleurs, est compris entre 5 et 25% du total de la chaleur dans l'étape de fusion réalisée dans la zone de fusion, préférentiellement de l'ordre de 10 à 15% ;
- les électrodes sont agencées dans une partie aval de la zone de fusion qui s'étend au-delà de la moitié de la longueur de ladite zone, voire au-delà de deux tiers de ladite longueur, de préférence au moins une partie desdites électrodes est agencée au voisinage du premier muret ;
- les électrodes de la zone de fusion sont commandées sélectivement pour piloter la première courroie de convection dans la zone de fusion ;
- les électrodes de la zone de fusion sont commandées sélectivement pour réguler la température du verre passant de la zone de fusion à la première zone d'affinage de la zone d'affinage ;
- le premier muret est configuré pour empêcher un retour du verre de la première zone d'affinage vers la zone de fusion, grâce à quoi la première courroie de convection de la zone de fusion est apte à être pilotée indépendamment de la deuxième courroie de convection de la première zone d'affinage ;
- le premier muret est configuré pour limiter la quantité de verre passant de la zone de fusion à la première zone d'affinage de manière à augmenter le temps de séjour du verre dans la zone de fusion ;
- les électrodes et ledit au moins un brûleur de la première zone d'affinage sont aptes à chauffer le verre à une température supérieure à 1450°C ;
- ledit au moins un brûleur est agencé dans la zone d'affinage pour obtenir un point chaud (ou point source) en surface qui détermine une zone d'inversion entre la deuxième courroie de convection et la troisième courroie de convection ;
- les électrodes de la première zone d'affinage sont commandées sélectivement pour piloter la deuxième courroie de convection dans la première zone d'affinage ;
- le deuxième muret est configuré pour empêcher un retour du verre de la deuxième zone d'affinage vers la première zone d'affinage, grâce à quoi la deuxième courroie de convection de la première zone d'affinage est apte à être pilotée indépendamment de la troisième courroie de convection ;
- le deuxième muret est configuré pour limiter la quantité de verre passant de la première zone d'affinage à la deuxième zone d'affinage de manière à augmenter le temps de séjour du verre dans la première zone d'affinage ;
- la deuxième zone d'affinage comporte des électrodes immergées dans le verre ;
- les électrodes de la deuxième zone d'affinage sont commandées sélectivement pour piloter la troisième courroie de convection ;
- le bassin de conditionnement de la zone de refroidissement comprend, d'amont en aval, un corset puis une braise ;
- le four hybride est apte à délivrer un verre de haute qualité présentant moins de 0,1 bulle par litre, préférentiellement moins 0,05 bulle par litre.

L'invention propose également un procédé de fabrication de verre dans un four hybride tel que celui décrit précédemment, ledit procédé de fabrication comportant les étapes consistant à :
(a) - fondre un mélange vitrifiable dans une zone de fusion à voûte chaude comportant une première courroie de convection du verre ;
(b) - affiner le verre dans une première zone d'affinage comportant une deuxième courroie de convection puis dans une deuxième zone d'affinage comportant une troisième courroie de convection, ladite première zone d'affinage étant respectivement séparée de la zone de fusion et de la deuxième zone d'affinage de manière à pouvoir piloter chacune indépendamment les unes des autres ;
(c) - refroidir le verre dans une zone de refroidissement formée par un bassin de conditionnement parcouru par la troisième courroie de convection.

Avantageusement, le procédé comporte une étape de commande des électrodes d'appoint agencées dans la zone de fusion pour piloter ladite première courroie de convection du verre, séparée par le premier muret, indépendamment de la deuxième courroie de convection de la première zone d'affinage.

Avantageusement, le procédé comporte une étape de commande des électrodes agencées dans la première zone d'affinage pour piloter ladite deuxième courroie de convection du verre, séparée par le deuxième muret, indépendamment de la troisième courroie de convection de la deuxième zone d'affinage.

Avantageusement, le procédé comporte une étape de commande des électrodes agencées dans la deuxième zone d'affinage pour piloter ladite troisième courroie de convection du verre, les électrodes étant commandées sélectivement pour réguler la température du verre dans ladite deuxième zone d'affinage de la zone d'affinage.

### Brève description des figures

D'autres caractéristiques et avantages de l'invention apparaitront au cours de la lecture de la description détaillée qui va suivre pour la compréhension de laquelle on se reportera aux dessins annexés dans lesquels :

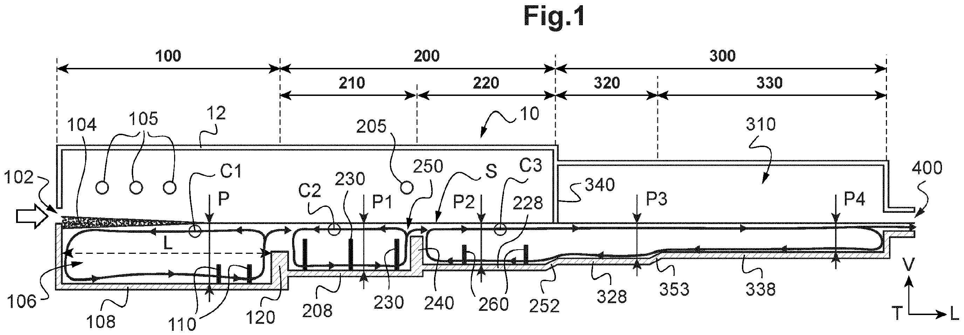

- la figure 1 est une vue de côté qui représente un four pour la fabrication de verre selon un mode de réalisation de l'invention comportant en outre une zone de fusion hybride associée à une zone d'affinage en deux parties comportant deux courroies de convection ainsi qu'une zone de refroidissement, et qui illustre la première zone d'affinage délimitée par un premier muret et un deuxième muret assurant respectivement une séparation avec la zone de fusion et avec la deuxième zone d'affinage ;

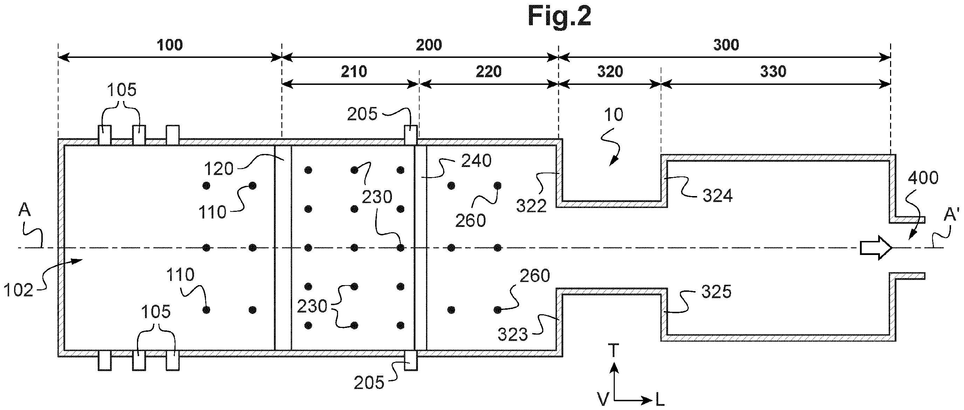

- la figure 2 est une vue de dessus qui représente le four selon la figure 1 et qui illustre en outre les électrodes agencées respectivement dans la zone de fusion, dans la première zone d'affinage et dans la deuxième zone d'affinage, ainsi que la zone de refroidissement formée par un bassin de conditionnement comportant un corset et une braise.

### Description détaillée de l'invention

Dans la suite de la description, on adoptera à titre non limitatif les orientations longitudinale, verticale et transversale en référence au trièdre (L, V, T) représenté sur les figures 1 et 2.

On utilisera également par convention les termes « amont » et « aval » en référence à l'orientation longitudinale, ainsi que « supérieur » et « inférieur » ou « haut » et « bas » en référence à l'orientation verticale, et enfin « gauche » et « droite » en référence à l'orientation transversale.

Dans la présente description, les termes « amont » et « aval » correspondent au sens d'écoulement du verre dans le four, le verre s'écoulant de l'amont vers l'aval suivant un axe longitudinal médian A-A' du four hybride (amont en A, aval en A') représenté sur la figure 2.

Par ailleurs, les termes « courroie » et « boucle » sont ici synonymes, ces termes en lien avec la recirculation du verre dans le four dans un sens horaire ou antihoraire étant bien connus de l'Homme du métier, tout comme le sont les notions de « voûte chaude » et de « voûte froide » dans un four destiné à la fabrication du verre.

On a représenté sur les figures 1 et 2, respectivement en vues de côté et de dessus (lesquelles ne sont pas à l'échelle), un four hybride 10 pour la fabrication de verre illustrant un mode de réalisation de la présente invention.

Par analogie avec la troisième conception de four décrite précédemment, le terme « hybride » est ici employé pour qualifier le four selon l'invention en raison de l'utilisation de deux sources d'énergie différentes, respectivement de l'énergie combustible et de l'énergie électrique.

Le four hybride 10 selon l'invention est tout particulièrement destiné à alimenter une unité de flottage du verre sur un bain de métal fondu, généralement de l'étain, pour la fabrication de verre plat.

Le four hybride 10 comporte successivement d'amont en aval, suivant l'axe longitudinal médian A-A' du four, au moins une zone 100 de fusion, une zone 200 d'affinage et d'homogénéisation, ci-après dite zone d'affinage, et une zone 300 de refroidissement du verre.

La four hybride 10 est du type à « voûte chaude », ci-après référencée 12 dans la zone 100 de fusion.

Selon une première caractéristique de l'invention, la zone 100 de fusion du four hybride 10 comporte une première courroie (C1) de convection formant une boucle de recirculation du verre dans le sens antihoraire.

De préférence, le four hybride 10 comporte une ouverture 102 d'enfournement par l'intermédiaire de laquelle un mélange vitrifiable 104 est introduit dans une partie amont de la zone 100 de fusion, ici longitudinalement suivant l'axe médian A-A' du four tel qu'illustré par une flèche sur la figure 1.

De manière connue, le mélange vitrifiable 104 (aussi appelé « composition ») comporte des matières premières et du calcin (ou « groisil »). Le calcin (en anglais « cullet ») est constitué de débris de verre qui, obtenus par recyclage du verre, sont broyés et nettoyés avant d'être ensuite ajoutés aux matières premières pour fabriquer à nouveau du verre.

Avantageusement, le calcin favorise la fusion, c'est-à-dire la transformation par fusion du mélange vitrifiable en verre.

De surcroît, le calcin permet de valoriser le verre usagé en le recyclant (le verre étant recyclable à l'infini), les quantités de matières premières nécessaires à la fabrication du verre s'en trouvant dès lors réduites à proportion, ce qui participe à la réduction de l'empreinte carbone du processus d'élaboration.

De manière connue, le mélange 104 vitrifiable est introduit dans la zone 100 de fusion du four hybride 10 par un dispositif d'enfournement (non représenté), encore appelé enfourneuse.

La zone 100 de fusion à voûte chaude 12 comporte au moins des brûleurs 105 qui sont aptes à fondre le mélange vitrifiable 104 pour obtenir un bain 106 de verre.

Dans la zone 100 de fusion, l'énergie thermique dégagée par la combustion réalisée par les brûleurs 105 est transmise directement au mélange vitrifiable et plus généralement au bain 106 de verre par rayonnement et convection, une autre partie est transmise par la voûte 12 qui la restitue par rayonnement, et qui pour cette raison est appelée « voûte chaude ».

Tel qu'illustré sur les figures 1 et 2, les brûleurs 105 sont avantageusement agencés dans la partie amont de la zone 100 de fusion, le nombre de brûleurs 105, par exemple ici trois, représentés étant purement illustratif et par conséquent nullement limitatif.

Les brûleurs 105 de la zone 100 de fusion, dits aériens, sont agencés entre la voûte chaude 12 et la surface du bain 106 de verre en fusion qui est partiellement recouverte, notamment en amont, par le mélange vitrifiable 104 matérialisé à l'aide de points sur la figure 1.

De préférence, les brûleurs 105 de la zone 100 de fusion sont des brûleurs dits transversaux, communément appelés ainsi en raison de leur agencement transversal, perpendiculairement à l'écoulement du verre dans le four hybride 10, de l'amont vers l'aval suivant l'axe médian A-A'.

La flamme produite par combustion par les brûleurs 105 transversaux s'étend transversalement de sorte que l'on peut ajuster la distribution longitudinale des températures en réglant la puissance de chacun des brûleurs 105.

De préférence, les brûleurs 105 sont agencés transversalement de part et d'autre de la zone 100 de fusion tel qu'illustré par la figure 2.

La combustion réalisée par les brûleurs 105 peut être obtenue de manière connue en associant différents types de combustible et de comburant mais dont le choix a en outre des conséquences directes dans le bilan carbone de la fabrication du verre, soit les émissions directes et indirectes de gaz à effet de serre qui sont liées à la fabrication du produit, notamment les émissions de dioxyde de carbone (CO₂).

Pour la combustion par les brûleurs 105 de la zone 100 de fusion, on utilise généralement l'oxygène présent dans l'air comme comburant, lequel air peut être enrichi en oxygène afin d'obtenir un air suroxygéné, voire on utilise quasiment de l'oxygène pur dans le cas particulier d'une oxycombustion.

Généralement, le combustible utilisé est du gaz naturel. Toutefois, pour améliorer notamment le bilan carbone, on utilisera avantageusement un biocombustible (en anglais « green-fuels ») en particulier un « biogaz », c'est à dire un gaz composé essentiellement de méthane et de dioxyde de carbone qui est produit par méthanisation soit la fermentation de matières organiques en l'absence d'oxygène, voire préférentiellement du « bio-méthane » (CH₄).

On utilisera encore plus préférentiellement comme combustible de l'hydrogène (H₂) qui, par comparaison à un biogaz, ne comporte avantageusement pas de carbone.

Avantageusement, le four hybride 10 de fabrication de verre selon l'invention peut comporter des régénérateurs en matériaux réfractaires fonctionnant (par exemple par paires et en inversion) ou encore des échangeurs métalliques air/fumée (aussi appelés récupérateurs) qui utilisent respectivement la chaleur contenue dans les fumées issues de la fabrication pour réaliser un préchauffage des gaz et ainsi améliorer la combustion.

Avantageusement, les brûleurs 105 du four hybride 10 sont aptes à fondre le mélange vitrifiable 104 sur une surface qui est inférieure à 0,3 m² par tonne de verre.

Une telle surface serait par comparaison supérieure avec un four électrique selon la deuxième conception de sorte que le four hybride 10 à flammes présente l'avantage d'être plus compact.

De plus, les brûleurs 105 permettent également de réaliser l'étape de fusion du mélange vitrifiable 104 à des températures moins élevées par rapport à une fusion électrique ce qui participe à réduire les phénomènes d'usure de l'infrastructure du four au bénéfice d'une augmentation de la durée de vie du four.

Dans un four pour la fabrication de verre, on appelle conventionnellement l'ensemble des blocs en contact avec le verre « infrastructure » et « superstructure » l'ensemble des matériaux disposés au-dessus de l'infrastructure.

Le matériau de superstructure, venant au-dessus des blocs de cuve de l'infrastructure et n'étant pas en contact avec le verre mais avec l'atmosphère à l'intérieur du four, est généralement de nature différente de celle des blocs de cuve de l'infrastructure.

Même si le matériau utilisé pour la superstructure est similaire à celui de l'infrastructure, par exemple dans le cas d'une voûte chaude comme dans le présent mode de réalisation, on distingue généralement ces deux parties de la structure d'un four.

Le four hybride 10 comporte une sole 108. De préférence, la sole 108 est ici plane dans la zone 100 de fusion de sorte que la profondeur P du bain 106 de verre comprise entre la surface du bain 106 et la sole 108 est sensiblement constante.

De préférence, la zone 100 de fusion comporte des électrodes 110 immergées dans le bain 106 de verre qui constituent avantageusement des moyens de chauffage électrique d'appoint (encore appelés « boosting » selon le terme anglais).

En effet, les électrodes 110 dans la zone 100 de fusion sont des moyens de chauffage complémentaires par rapport aux brûleurs 105 qui constituent des moyens de chauffage principaux permettant de fondre le mélange vitrifiable 104. L'étape de fusion du verre est par conséquent obtenue en utilisant une énergie combustible et, en appoint, de l'énergie électrique.

Avantageusement, l'apport de chaleur par les électrodes 110, en appoint des brûleurs 105, est compris entre 5 et 25% du total de la chaleur de l'étape de fusion réalisée dans la zone 100 de fusion, préférentiellement de l'ordre de 10 à 15%.

De préférence, les électrodes 110 sont montées à travers la sole 108 de la zone 100 de fusion du four par l'intermédiaire de porte-électrodes (non représentés) notamment aptes à permettre de les alimenter électriquement.

De préférence, les électrodes 110 s'étendent verticalement tel qu'illustré par la figure 1. En variante, les électrodes 110 s'étendent obliquement, c'est-à-dire sont inclinées de manière à présenter un angle donné par rapport à l'orientation verticale.

Selon une autre variante d'agencement, les électrodes 110 traversent au moins une paroi latérale délimitant ladite zone 100 de fusion, lesdites électrodes 110 s'étendant alors horizontalement et/ou obliquement.

Avantageusement, les électrodes 110 sont en molybdène, ce métal réfractaire supportant des températures de 1700°C étant particulièrement apte à permettre de chauffer le bain 106 de verre dans la zone 100 de fusion.

Par ailleurs et comme pour les brûleurs 105, le nombre de six électrodes 110 représentées ici sur les figures 1 et 2 est purement illustratif et par conséquent nullement limitatif.

De préférence, les électrodes 110 de fusion sont réparties transversalement de manière régulière dans la zone 100 de fusion.

Avantageusement, les électrodes 110 sont agencées dans une partie aval de la zone 100 de fusion qui s'étend au-delà de la moitié de la longueur (L) de ladite zone 100 de fusion, voire au-delà de deux tiers de ladite longueur (L).

La zone 100 de fusion du four hybride 10 comporte un muret 120, dit premier muret, qui positionné en aval délimite ainsi la zone 100 de fusion comportant la première courroie (C1) de convection, ledit muret 120 s'étendant préférentiellement sur toute la largeur de la zone 100 de fusion, transversalement d'une paroi à l'autre.

De préférence, au moins une partie desdites électrodes 110 est agencée au voisinage dudit premier muret 120 délimitant en aval la zone 100 de fusion.

Le four hybride 10 peut avantageusement comporter des bouillonneurs (non représentés) qui sont en outre agencés dans la zone 100 de fusion, c'est à dire un système d'injection d'au moins un gaz, tel que de l'air ou de l'azote, au niveau de la sole dont les bulles créent alors un mouvement ascensionnel du verre.

Selon une deuxième caractéristique de l'invention, la zone 200 d'affinage comporte une deuxième courroie (C2) de convection, dite boucle de recirculation amont, et une troisième courroie (C3) de convection, dite boucle de recirculation aval.

La zone 200 d'affinage du verre comporte une première zone 210 d'affinage et une deuxième zone 220 d'affinage, ladite première zone 210 d'affinage comportant avantageusement au moins un brûleur 205 et des électrodes 230.

Le nombre et la position du brûleur 205 et des électrodes 230 respectivement représentés sur les figures 1 et 2 sont purement illustratifs et donc nullement limitatifs.

La première zone 210 d'affinage est respectivement séparée de la zone 100 de fusion par le premier muret 120 et de la deuxième zone 220 d'affinage par un deuxième muret 240.

Dans la zone 200 d'affinage du four hybride 10, le verre recircule ainsi dans la première zone 210 d'affinage dans le sens antihoraire suivant la deuxième courroie (C2) de convection et dans la deuxième zone 220 d'affinage dans le sens horaire suivant la troisième courroie (C3) de convection.

Le premier muret 120 est configuré pour empêcher un retour du verre de la première zone 210 d'affinage vers la zone 100 de fusion de sorte que la zone 100 de fusion et la première zone 210 d'affinage sont séparées l'une de l'autre.

Avantageusement, la première courroie (C1) de convection dans la zone 100 de fusion est séparée de la deuxième courroie (C2) de convection dans la première zone 210 d'affinage grâce à quoi il est dès lors possible de piloter chacune desdites courroies C1, C2 indépendamment l'une de l'autre.

Avantageusement, le premier muret 120 est configuré pour limiter la quantité de verre passant de la zone 100 de fusion à la première zone 210 d'affinage de manière notamment à augmenter le temps de séjour du verre dans la zone 100 de fusion.

En effet, le premier muret 120 s'étend verticalement depuis la sole 108 du four sur une hauteur déterminée avec une partie sommitale immergée en dessous d'une surface (S) du verre.

Dans le four hybride 10, le prélèvement du verre de la zone 100 de fusion vers la première zone 210 d'affinage s'effectue pardessus le premier muret 120.

Outre le fait d'assurer l'absence de retour par séparation desdites courroies C1 et C2, la hauteur du muret 120 détermine donc également une section de passage du verre de la zone 100 de fusion vers la première zone 210 d'affinage.

Grâce au premier muret 120, la zone 100 de fusion est apte à être pilotée indépendamment de la première zone 210 d'affinage et cela en commandant notamment sélectivement les électrodes 110 pour piloter la première courroie (C1) de convection.

En effet, l'agencement des électrodes 110 immergées dans la partie aval de la zone 100 de fusion permet d'y créer un point plus chaud dans le bain 106 de verre relativement à la partie amont dans laquelle les brûleurs 105 sont disposés au-dessus de la surface du bain 106 recouverte du mélange vitrifiable 104.

Avantageusement, les électrodes 110 permettent également de réguler la température du verre passant de la zone 100 de fusion vers la première zone 210 d'affinage.

Comme le premier muret 120, le deuxième muret 240 s'étend verticalement depuis une sole 208 de la première zone 210 d'affinage du four sur une hauteur déterminée, avec une partie sommitale immergée en dessous d'une surface (S) du verre qui détermine une section de passage du verre de la première zone 210 d'affinage vers la deuxième zone 220 d'affinage de la zone 200 d'affinage.

Avantageusement, le deuxième muret 240 est configuré pour empêcher un retour du verre de la deuxième zone 220 d'affinage vers la première zone 210 d'affinage, grâce à quoi la deuxième courroie (C2) de convection dans la première zone 210 d'affinage et la troisième courroie C3 de convection sont séparées et aptes à être pilotées indépendamment l'une de l'autre.

A l'instar du premier muret 120, le deuxième muret 240 permet avantageusement d'augmenter le temps de séjour du verre dans la première zone 210 d'affinage ce qui participe directement à l'obtention d'un verre de haute qualité.

De préférence, la sole 208 est plane. Tel qu'illustré sur la figure 1, le four hybride 10 comporte au moins une variation de la profondeur de la sole par rapport à la surface S du verre.

De préférence, le four hybride 10 comporte par exemple une élévation de la sole 208 de la première zone 210 d'affinage par rapport à la sole 108 de la zone 100 de fusion de sorte que la profondeur P1 de verre dans la première zone 210 d'affinage est inférieure à la profondeur P du verre dans la zone 100 de fusion.

Avantageusement, les électrodes 230 et ledit au moins un brûleur 205 de la première zone 210 d'affinage sont aptes à chauffer le verre à une température supérieure à 1450°C.

Grâce au premier muret 120 et au deuxième muret 240, la première zone 210 d'affinage est séparée de la zone 100 de fusion et de la deuxième zone 220 d'affinage respectivement, isolée relativement aux autres en l'absence de retour, la première zone 210 d'affinage est apte à être pilotée indépendamment.

Ainsi, le four hybride 10 comporte trois courroies C1, C2 et C3, respectivement indépendantes les unes des autres.

Dans la première zone 210 d'affinage, les électrodes 230 immergées dans le verre permettent de le porter à une température qui est déterminée uniquement en fonction de l'affinage et notamment indépendamment de la zone 100 de fusion.

En effet, en l'absence de retour et du fait de la séparation entre la première courroie C1 et la deuxième courroie C2 de convection, la chaleur apportée par les électrodes 230 n'est utilisée que pour l'affinage et ce faisant l'est avantageusement de manière optimale.

De la même manière, la chaleur apportée par les brûleurs 105 et les électrodes 110 en appoint dans la zone 100 de fusion est destinée à l'étape de fusion du verre sans qu'il soit nécessaire de prendre en compte l'étape d'affinage.

Avantageusement, la température dans la zone 100 de fusion et la température dans la première zone 210 d'affinage sont susceptibles d'être commandées indépendamment l'une de l'autre.

De préférence, dans la première zone 210 d'affinage du verre, la chaleur est principalement apportée par les électrodes 230, ledit au moins un brûleur 205 n'intervenant qu'en appoint, de sorte que dans l'apport de chaleur l'énergie électrique y prévaut sur l'énergie combustible, contrairement à la zone 100 de fusion.

En variante, la première zone 210 d'affinage du verre ne comporte que des brûleurs et pas d'électrodes 230, le chauffage du verre s'effectuant alors uniquement en surface.

Les électrodes 230 sont toutefois avantageuses en raison de leur efficacité de chauffage dès lors que lesdites électrodes 230 sont immergées directement dans le verre fondu provenant de la zone 100 de fusion.

De préférence, les électrodes 230 sont ici plus longues comparativement aux électrodes 110 par exemple de manière à améliorer encore le chauffage du verre dans la première zone 210 d'affinage en augmentant la surface d'échange thermique avec le verre.

Ledit au moins un brûleur 205 est agencé dans la zone 200 d'affinage pour obtenir un point chaud (ou point source) en surface qui détermine une zone 250 d'inversion entre la deuxième courroie C2 de convection et la troisième courroie C3 de convection.

De préférence, le four hybride 10 comporte une autre variation de la profondeur de la sole par rapport à la surface (S) du verre entre la première zone 210 d'affinage et la deuxième zone 220 d'affinage, plus précisément une élévation d'une sole 228 de la deuxième zone 220 d'affinage.

Tel qu'illustré sur la figure 1, la profondeur P2 de verre dans la deuxième zone 220 d'affinage est ainsi inférieure à la profondeur P1 de verre dans la première zone 210 d'affinage.

Selon une troisième caractéristique de l'invention, la zone 300 de refroidissement du verre comporte un bassin 310 de conditionnement qui est parcouru par ladite troisième courroie (C3) de convection.

Avantageusement, le bassin 310 de conditionnement de la zone 300 de refroidissement comprend, d'amont en aval, un corset 320, c'est à dire une zone de largeur réduite telle qu'illustrée par la figure 2, puis une braise 330.

Le passage de la deuxième zone 220 d'affinage au corset 320 se fait par un rétrécissement brusque de la largeur et de la section de passage du verre, par exemple ici par des parois 322 et 324 formant un angle de 90° avec l'axe longitudinal médian A-A' du four.

En variante, l'angle en entrée du corset 320 pourrait présenter une valeur qui soit supérieure à 90° de sorte que le rétrécissement de la largeur soit moins brusque, plus progressif.

Le passage du corset 320 à la braise 330 se fait par un élargissement brusque de la section de passage du verre, par exemple ici par des parois 324 et 325 formant un angle de 90° avec l'axe longitudinal médian A-A' du four.

De manière analogue, la valeur de l'angle en sortie du corset 320 pourrait être choisie pour que l'élargissement soit également moins brusque, plus progressif suivant l'axe longitudinal médian A-A' du four.

Avantageusement, l'atmosphère de la zone 200 d'affinage et l'atmosphère plus froide de la zone 300 de refroidissement sont séparées l'une de l'autre par un écran thermique 340 tel qu'une cloison s'étendant verticalement depuis la voûte dans la zone 300 de refroidissement jusqu'au voisinage de la surface S du verre, préférentiellement sans tremper dans le verre.

De préférence, le four hybride 10 comporte encore une autre variation de la profondeur de la sole par rapport à la surface (S) du verre entre la deuxième zone 220 d'affinage et la zone 300 de refroidissement.

De préférence, le four hybride 10 comporte une première élévation d'une sole 328 du corset 320 par rapport à la sole 228 de la deuxième zone 220 d'affinage. La profondeur P3 de verre dans le corset 320 est ainsi inférieure à la profondeur P2 de verre dans la deuxième zone 220 d'affinage.

Avantageusement, la jonction entre la sole 228 de la deuxième zone 220 d'affinage et la sole 328 du corset 320 s'effectue par un tronçon 252 incliné de manière à assurer une progressivité dans le passage du verre de la profondeur P2 à la profondeur P3.

De préférence, le four hybride 10 comporte une deuxième élévation d'une sole 338 de la braise 330 par rapport à la sole 328 du corset 320. La profondeur P4 de verre dans la braise 330 est ainsi inférieure à la profondeur P3 de verre dans le corset 320.

Avantageusement, la jonction entre la sole 328 du corset 320 et la sole 338 de la braise 330 s'effectue par un tronçon 353 incliné de manière à assurer une progressivité dans le passage de la profondeur P3 à la profondeur P4.

De préférence, la profondeur (P, P1, P2, P3, P4) de verre dans le four hybride 10 décroît successivement de l'amont vers l'aval, depuis la zone 100 de fusion jusqu'à la braise 330 de la zone 300 de refroidissement.

Toutefois, les élévations de la sole du four hybride 10 qui viennent d'être décrites en référence au mode de réalisation illustré par les figures 1 et 2 ne constituent qu'un exemple de variations de profondeur laquelle pourrait en variante comporter une ou plusieurs dénivellations.

De préférence, la deuxième zone 220 d'affinage comporte des électrodes 260 immergées dans le verre. En variante, les électrodes 260 sont remplacées par au moins un brûleur.

Le nombre et la position des électrodes 260 représentées sur les figures 1 et 2 sont purement illustratif et donc nullement limitatif.

Avantageusement, les électrodes 260 de la deuxième zone 220 d'affinage sont commandées sélectivement pour piloter la troisième courroie (C3) de convection suivant laquelle le verre recircule dans le sens horaire.

En effet, la troisième courroie (C3) de convection s'étend longitudinalement depuis la deuxième zone 220 d'affinage jusqu'à la braise 330, parcourant également toute la zone 300 de refroidissement de sorte que l'apport de chaleur du seul verre prélevé dans la première zone 210 d'affinage peut être insuffisant.

Avantageusement immergées dans le verre et agencées dans la deuxième zone 220 d'affinage, les électrodes 260 sont ainsi aptes à créer un point chaud en amont pour piloter la troisième courroie (C3) de convection, dite boucle de recirculation aval.

Tel qu'expliqué précédemment, grâce à la configuration du au deuxième muret 240, il n'y a pas de retour de la deuxième zone 220 d'affinage vers la première zone 210 d'affinage du verre, la deuxième courroie (C2) de convection est apte à être pilotée indépendamment de la troisième courroie (C3) de convection.

Avantageusement, les électrodes 260 participent également à parfaire l'affinage réalisé dans la première zone 210 d'affinage.

Le bassin 310 de conditionnement comporte un canal 400 d'écoulement situé en aval de la braise 330.

Avantageusement, après le bassin 310 de conditionnement, aucun courant de retour n'a lieu dans le canal 400 d'écoulement destiné à alimenter en verre une zone de formage, dit autrement l'écoulement du verre dans le canal 400 est un écoulement de type « piston ».

Avantageusement, le four hybride 10 selon l'invention est apte à délivrer un verre de haute qualité présentant moins de 0,1 bulle par litre, préférentiellement moins 0,05 bulle par litre.

Avantageusement, un tel verre de haute qualité convient tout particulièrement pour alimenter une unité de flottage du verre sur un bain de métal fondu destinée à la fabrication de verre plat.

L'invention concerne encore un procédé de fabrication de verre dans un four hybride 10 comme celui du mode de réalisation qui vient d'être décrit en référence aux figures 1 et 2.

Le procédé de fabrication comporte les étapes consistant à :
(a) - fondre un mélange vitrifiable dans une zone 100 de fusion à voûte chaude comportant une première courroie C1 de convection du verre ;
(b) - affiner le verre dans une première zone 210 d'affinage comportant une deuxième courroie (C2) de convection puis dans une deuxième zone 220 d'affinage comportant une troisième courroie (C3) de convection, ladite première zone 210 d'affinage étant respectivement séparée de la zone 100 de fusion et de la deuxième zone 220 d'affinage de manière à pouvoir piloter chacune indépendamment les unes des autres ;
(c) - refroidir le verre dans une zone 300 de refroidissement formée par un bassin 310 de conditionnement parcouru par la troisième (C3) courroie de convection.

Avantageusement, le procédé comporte une étape (a1) de commande des électrodes 110 d'appoint agencées dans la zone 100 de fusion pour piloter ladite première courroie (C1) de convection du verre.

Les électrodes 110 sont commandées sélectivement pour réguler la température du verre passant de ladite zone 100 de fusion à la première zone 210 d'affinage.

Avantageusement, la première courroie (C1) de convection séparée par le premier muret 120 est pilotée indépendamment de la deuxième courroie (C2) de convection de la première zone 210 d'affinage.

Avantageusement, le procédé comporte une étape (b1) de commande des électrodes 230 agencées dans la première zone 210 d'affinage pour piloter ladite deuxième courroie (C2) de convection du verre.

Avantageusement, la deuxième courroie (C2) de convection du verre séparée par le deuxième muret 240 est pilotée indépendamment de la troisième courroie (C3) de convection de la deuxième zone 220 d'affinage.

Avantageusement, le procédé comporte une étape (b2) de commande de moyens de chauffage tels qu'au moins un brûleur et/ou des électrodes, préférentiellement ici des électrodes 260, agencés dans la deuxième zone 220 d'affinage pour piloter ladite troisième courroie (C3) de convection du verre.

Avantageusement, les électrodes 260 étant commandées sélectivement pour réguler la température du verre dans ladite deuxième zone 220 d'affinage de la zone 200 d'affinage.

Dans un four hybride 10 selon l'invention, la part de l'énergie électrique dans l'apport de chaleur par les électrodes 110, 230 et 260 s'élève avantageusement à plus de 40% de la totalité des apports de chaleur du four.

La conception du four hybride 10 selon l'invention permet avantageusement de piloter finement chacune des étapes de fusion, d'affinage et de refroidissement du processus d'élaboration du verre et ce faisant de garantir une efficience énergétique.

Grâce au premier muret 120 et au deuxième muret 240 respectivement configurés pour empêcher tout retour, les zones de fusion, d'affinage et de refroidissement sont avantageusement séparées les unes des autres rendant dès lors possible un pilotage de la courroie de convection dans chacune indépendamment de celle située en aval.

Avantageusement, la conception du four hybride 10 permet d'optimiser le rendement énergétique du four en apportant au plus juste la chaleur nécessaire à chaque étape du processus d'élaboration du verre grâce à quoi on améliore le bilan carbone.

## Revendications

1. Four hybride (10) pour la fabrication de verre, en particulier pour alimenter une unité de flottage du verre sur un bain de métal fondu, ledit four hybride (10) comportant d'amont en aval :
- une zone (100) de fusion à voute chaude comportant au moins des brûleurs (115) aptes à fondre un mélange vitrifiable pour obtenir un bain (106) de verre, ladite zone (100) de fusion délimitée par un premier muret (120) comportant une première courroie (C1) de convection ;
- une zone (200) d'affinage du verre comportant une première zone (210) d'affinage qui comporte au moins un brûleur (205) et des électrodes (230) et une deuxième zone (220) d'affinage, ladite première zone (210) d'affinage étant respectivement séparée de la zone (100) de fusion par ledit premier muret (120) et de la deuxième zone (220) d'affinage par un deuxième muret (240), dans laquelle le verre recircule dans la première zone (210) d'affinage suivant une deuxième courroie (C2) de convection et dans la deuxième zone (220) d'affinage suivant une troisième courroie (C3) de convection ; et
- une zone (300) de refroidissement du verre comportant un bassin (310) de conditionnement parcouru par ladite troisième courroie (C3) de convection.

2. Four selon la revendication 1, **caractérisé en ce que** la zone (100) de fusion comporte des électrodes (110) immergées dans le bain (106) de verre qui constituent des moyens de chauffage électrique d'appoint.

3. Four selon la revendication 2, **caractérisé en ce que** l'apport de chaleur par les électrodes (110), en appoint des brûleurs (105), est compris entre 5 et 25% du total de la chaleur dans l'étape de fusion réalisée dans la zone (100) de fusion, préférentiellement de l'ordre de 10 à 15%.

4. Four selon l'une des revendications 2 ou 3, **caractérisé en ce que** les électrodes (110) sont agencées dans une partie aval de la zone (100) de fusion qui s'étend au-delà de la moitié de la longueur (L) de ladite zone (100), voire au-delà de deux tiers de ladite longueur (L), de préférence au moins une partie desdites électrodes (110) est agencée au voisinage du premier muret (120).

5. Four selon l'une quelconque des revendications 2 à 4, **caractérisé en ce que** les électrodes (110) de la zone (100) de fusion sont commandées sélectivement pour piloter la première courroie (C1) de convection dans la zone (100) de fusion.

6. Four selon l'une quelconque des revendications précédentes, **caractérisé en ce que** le premier muret (120) est configuré pour empêcher un retour du verre de la première zone (210) d'affinage vers la zone (100) de fusion, grâce à quoi la première courroie (C1) de convection de la zone (100) de fusion est apte à être pilotée indépendamment de la deuxième courroie (C2) de convection de la première zone (210) d'affinage.

7. Four selon l'une quelconque des revendications précédentes, **caractérisé en ce que** le premier muret (120) est configuré pour limiter la quantité de verre passant de la zone (100) de fusion à la première zone (210) d'affinage de manière à augmenter le temps de séjour du verre dans la zone (100) de fusion.

8. Four selon l'une quelconque des revendications précédentes, **caractérisé en ce que** les électrodes (230) et ledit au moins un brûleur (205) de la première zone (210) d'affinage sont aptes à chauffer le verre à une température supérieure à 1450°C.

9. Four selon l'une quelconque des revendications précédentes, **caractérisé en ce que** ledit au moins un brûleur (205) est agencé dans la zone (200) d'affinage pour obtenir un point chaud en surface qui détermine une zone (250) d'inversion entre la deuxième courroie (C2) de convection et la troisième courroie (C3) de convection.

10. Four selon l'une quelconque des revendications précédentes, **caractérisé en ce que** les électrodes (230) de la première zone (210) d'affinage sont commandées sélectivement pour piloter la deuxième courroie (C2) de convection dans la première zone (210) d'affinage.

11. Four selon l'une quelconque des revendications précédentes, **caractérisé en ce que** le deuxième muret (240) est configuré pour empêcher un retour du verre de la deuxième zone (220) d'affinage vers la première zone (210) d'affinage, grâce à quoi la deuxième courroie (C2) de convection de la première zone (210) d'affinage est apte à être pilotée indépendamment de la troisième courroie (C3) de convection.

12. Four selon l'une quelconque des revendications précédentes, **caractérisé en ce que** le deuxième muret (240) est configuré pour limiter la quantité de verre passant de la première zone (210) d'affinage à la deuxième zone (220) d'affinage de manière à augmenter le temps de séjour du verre dans la première zone (210) d'affinage.

13. Four selon l'une quelconque des revendications précédentes, **caractérisé en ce que** la deuxième zone (220) d'affinage comporte des électrodes (260) immergées dans le verre.

14. Four selon la revendication précédente, **caractérisé en ce que** les électrodes (260) de la deuxième zone (220) d'affinage sont commandées sélectivement pour piloter la troisième courroie (C3) de convection.

15. Four selon l'une quelconque des revendications précédentes, **caractérisé en ce que** le bassin (310) de conditionnement de la zone (300) de refroidissement comprend, d'amont en aval, un corset (320) puis une braise (330).

16. Four selon l'une quelconque des revendications précédentes, **caractérisé en ce que** le four hybride (10) est apte à délivrer un verre de haute qualité présentant moins de 0,1 bulle par litre, préférentiellement moins 0,05 bulle par litre.

17. Procédé de fabrication de verre dans un four hybride (10) selon l'une quelconque des revendications précédentes, ledit procédé de fabrication comportant les étapes consistant à :
(a) - fondre un mélange vitrifiable dans une zone (100) de fusion à voûte chaude comportant une première courroie (C1) de convection du verre ;
(b) - affiner le verre dans une première zone (210) d'affinage comportant une deuxième courroie (C2) de convection puis dans une deuxième zone (220) d'affinage comportant une troisième courroie (C3) de convection, ladite première zone (210) d'affinage étant respectivement séparée de la zone (100) de fusion et de la deuxième zone (220) d'affinage de manière à pouvoir piloter chacune indépendamment les unes des autres ;
(c) - refroidir le verre dans une zone (300) de refroidissement formée par un bassin (310) de conditionnement parcouru par la troisième (C3) courroie de convection.

18. Procédé de fabrication de verre selon la revendication 17, **caractérisé en ce que** le procédé comporte :
- une étape (a1) de commande des électrodes (110) d'appoint agencées dans la zone (100) de fusion pour piloter ladite première courroie (C1) de convection du verre, séparée par le premier muret (120), indépendamment de la deuxième courroie (C2) de convection de la première zone (210) d'affinage.

19. Procédé selon l'une des revendications 17 ou 18, **caractérisé en ce que** le procédé comporte :
- une étape (b1) de commande des électrodes (230) agencées dans la première zone (210) d'affinage pour piloter ladite deuxième courroie (C2) de convection du verre, séparée par le deuxième muret (240), indépendamment de la troisième courroie (C3) de convection de la deuxième zone (220) d'affinage.

20. Procédé selon l'une quelconque des revendications 17 à 19, **caractérisé en ce que** le procédé comporte :
- une étape (b2) de commande des électrodes (260) agencées dans la deuxième zone (220) d'affinage pour piloter ladite troisième courroie (C3) de convection du verre, les électrodes (260) étant commandées sélectivement pour réguler la température du verre dans ladite deuxième zone (220) d'affinage de la zone (200) d'affinage.
